# EUROPEAN PATENT SPECIFICATION

(11) **EP 1 089 894 B1**
(45) Date of publication and mention of the grant of the patent: **11.09.2002**
(21) Application number: 99931445.3
(22) Date of filing: 25.06.1999
(51) Int. Cl.: B60K 41/20, G05G 9/02

(54) **DEVICE FOR AUTOMATIC RELEASE OF ACCELERATOR DURING THE BRAKING ACTION**
GERÄT ZUR AUTOMATISCHEN GASPEDALRÜCKNAHME WÄHREND DES BREMSENS
DISPOSITIF DE LIBERATION AUTOMATIQUE DE L'ACCELERATEUR LORS DU FREINAGE

(30) Priority: 26.06.1998 IT RM980429
(43) Date of publication of application: 11.04.2001
(73) Proprietor: Sistema Guida 2000 S.r.l., 00166 Roma (IT); Guidsimplex S.n.c. Di Giancarlo Venturini E C., 00166 Roma (IT)
(72) Inventor: SPINNATO, Dario, Sistema Guida 2000 s.r.l., 00166 Roma (IT)
(74) Representative: Iannone, Carlo Luigi
(86) International application number: IT9900190
(87) International publication number: WO00000362

(56) References cited:
- EP-A- 0 139 082
- EP-A- 0 297 671
- AU-A- 663 460
- GB-A- 2 290 509
- US-A- 5 103 946

## Description

The present invention relates to a device for automatic release of the accelerator during a braking action as defined in the preamble of claim 1 and known from, for instance, AU-663 460 A.

More specifically, the invention relates to a device of the above kind, particularly employable in the automotive field, that allows to avoid any risk deriving from the prosecution of the acceleration action during the braking.

The problem of automatically releasing the accelerator during the braking phase is very important in many technical fields, but it is particularly important in the apparatuses to allow the driving to disabled persons.

At present, acceleration and braking devices for disabled persons are known, comprised of a pivoted lever under the steering member of the motor vehicle, or on the floor of the same, and provided with a handle of the motorcycle kind.

However, said devices does not allow the automatic annulment of the acceleration in case of braking. In fact, in case the acceleration handle is not manually, completely or partially, reset, as it can occur in case of emergency manoeuvring, an unavoidable and dangerous interference occurs between the two actions, and consequently the braking action is made inefficacy by the acceleration still active.

Main object of the present invention is that of solving the above mentioned drawbacks, suggesting a technical solution allowing to make the acceleration and braking action independent, and is that of obviating to the possible interference during the vehicle guide between the acceleration and braking actions.

This object of the present invention is solved by a device having the features of claim 1.

Preferably, according to the invention, a cruise control device can be provided.

Particularly, said cruise control device can provide a plate, provided behind the accelerator device, and provided with means for fixing the acceleration position and means for interaction with manual acceleration and braking means.

The present invention will be now described, for illustrative but not limitative purposes, according to its preferred embodiments, with particular reference to the figures of the enclosed drawings, wherein:
Figure 1 is a schematic perspective view of a device according to the invention;
figure 2 is an exploded view of the device of figure 1; and
figure 3 is an exploded view of a second embodiment of a device according to the invention.

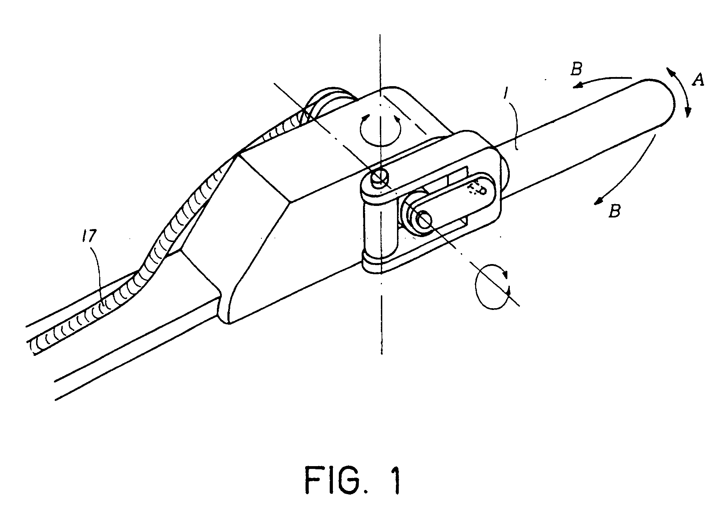

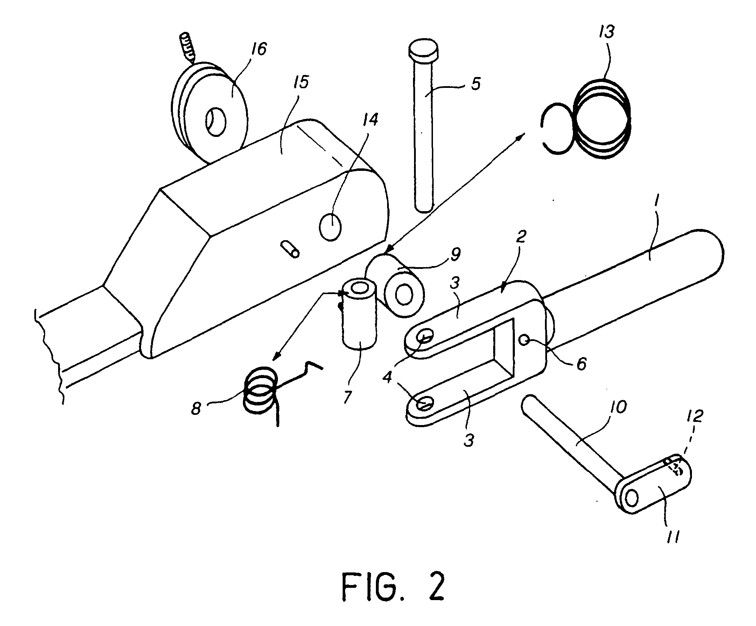

Making reference to figures 1 and 2 of the enclosed drawings, the device according to the invention is mounted on an acceleration and braking assembly to allow the driving to disabled persons, in this case particularly, even if not exclusively, to tetraplegic persons.

In figures 1 and 2, it is shown a lever 1, upon which the driver acts both to accelerate and brake, respectively according to the directions indicated by arrows A and B.

Said lever 1 ends with a fork 2, provided, on the free ends of its arms 3, with through holes 4, wherein the pin 5 is coupled.

On the body of the fork 2, laterally outwardly with respect to the device, observing the same in the figure, it is further provided a blind hole 6, the function of which will be described in greater detail in the following.

On the pin 5 a sleeve 7, as well as hindering spring 8 are provided.

Perpendicularly with respect to the fork 2, between the two arms 3, a further centrally holed sleeve 9 is placed, through which the pin 10 passes, said pin 10 being externally provided with a plate 11, said plate having a relief 12 coupling with said blind hole 6.

Coaxially to the sleeve 9 a hindering spring 13 is placed, hindering the motion of the lever 1 according to the arrow A.

Pin 10 passes through a hole 14 of the body 15 to couple with a pulley 16 of the acceleration device mounted on the vehicle to allow the driving to disabled persons, and which is not part of the invention, and for this reason it is not described in greater detail.

Making particularly reference to figure 1, in the following the operation of the device according to the invention will be explained.

During acceleration, the driver acts on the lever 1, according to the direction of arrow A. Relief 12 is engaged within the blind hole 6, so that said action involves the rotation of all the lever 1 - fork 2 - pin 10 assembly, along with plate 11 - pulley 16, with respect to the body 15, thus acting on the cable 17 of the acceleration device (not shown).

In case of braking, driver acts on the lever 1 according to arrow B, so that the releasing of the relief 12 from the blind hole 6 is obtained. Now, the action of the spring 13 instantaneously brings back the pin 10-plate 11 - pulley 16 assembly in the original position, thus eliminating any action on the acceleration device of the motor vehicle and preventing any possibility of occurring accidents like those described in the introductive portion of the description.

On the inner part of the fork 2 a stop (not shown in the figure) is shown, determining the lever 1 and fork 2 run, necessary to determine the release of the acceleration action before prosecuting the braking action.

Once the braking action is finished, spring 8 will couple again relief 12 and blind hole, now ready to start again the use of the device.

Obviously, as already mentioned, the device according to the invention can be realised with modifications which are included in the normal knowledge of one skilled in the art.

For example, pin 10 and plate 11 could be provided on the other side of the body 15, beyond the pulley 16 connecting with the acceleration device.

Furthermore, the same pulley 16 could be replaced by different means for interaction with the acceleration device.

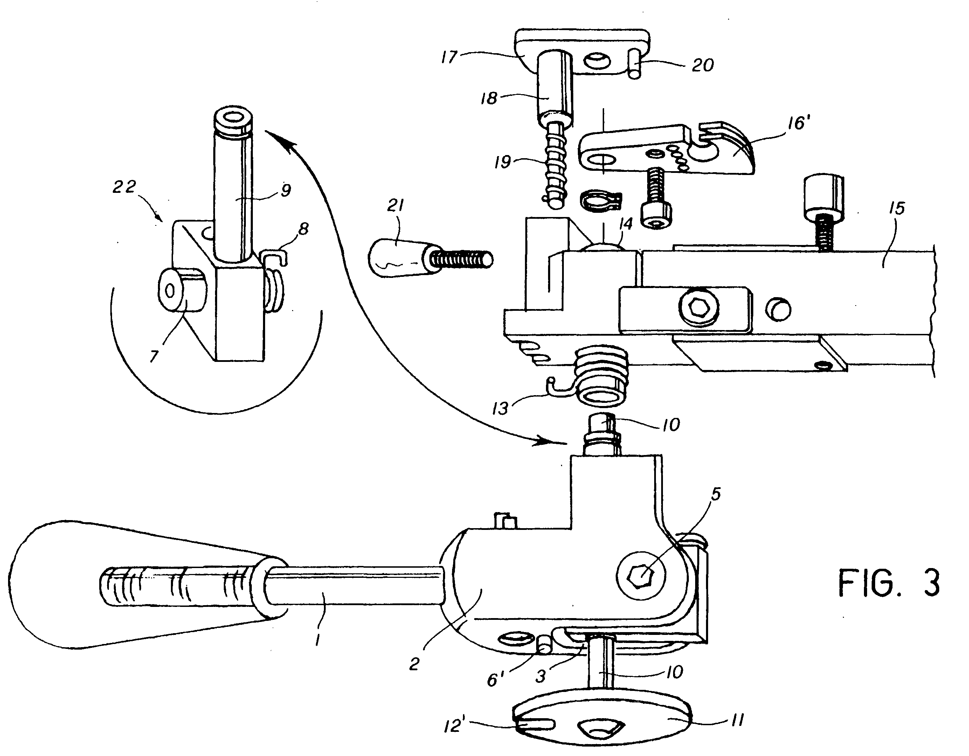

Coming now to make reference to figure 3, a second embodiment of the device according to the invention is shown. The solution shown in figure 3 is substantially equal to the preceding one, so that corresponding parts will be indicated by the same references.

Substantially, the main difference is the fact that it is realised for a left-hander person, and that it provides a cruise control device, that could also be provided in the previous embodiment.

Device shown in figure 3 provides a lever 1, upon which the driver acts both to accelerate and brake.

Said lever 1 ends with an element 2, provided with a U shaped portion provided, on the free ends of its arms 3, with through holes 4, wherein the pin 5 is coupled.

On the body of the element 2 a peg 6' is provided, the function of which will be described in greater detail in the following.

Pin 5 passes within an element 22, shown in the enlarged particular of the figure, providing two perpendicular sleeves, respectively 7 and 9, and a spring 8.

Pin 10 passes through the sleeve 9. Externally to said pin 10 a plate 11 is provided, said plate having a notch 12' coupling with said peg 6'.

Coaxially to the sleeve 9 a hindering spring 13 is placed, hindering the motion of the lever 1 during acceleration.

Pin 10 passes through a hole 14 realised in the body 15 to couple with a plate 16' of the acceleration device mounted on the vehicle to allow the driving to disabled persons, and which is not part of the invention, and for this reason it is not described in greater detail.

On said body 15 it is further mounted the "cruise control" device, comprised of a plate 17, provided on one side with a pin 18 ending with a spiral spring 19, and that enters within a hole (not shown) realised in the body 15, and on the other side ending with a peg 20, that will couple with one of a plurality of circumferential holes (not shown), realised on said element 16'.

Laterally, a knob 21 is provided, coupled with said pin 18 and slidable along a slot (not shown), realised in said body 15.

If the driver wishes to use the cruise control device, he will act on the knob 21, returning the plate 17 and thus inserting the peg 20 in the suitable hole of said plurality of circumferential holes.

In any moment, in case of further action on the lever 1, either to brake or to accelerate, the cruise control device will be released.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for automatic release of acceleration during a braking action, comprising
- a manual acceleration device,
- means (16) interacting with said manual acceleration device, and
- control lever (1) to control the acceleration and the braking, whereby said acceleration and braking actions occur according to two substantially perpendicular directions,
- means (10,11) for integral coupling said interaction means (16) with said manual acceleration device,
- releasable coupling means (12, 6) integral with said integral coupling means (10, 11) and releasable connectable with said control lever (1),
- elastic hindering means (8) to hinder the release between said releasable coupling means (12, 6) and said control lever (1), and
- elastic return means (13) to return the acceleration device in a neutral position, **characterised**
- **in that** said integral coupling means includes a pin (10) passing through a hole (14) provided in a body (15) of said manual acceleration device, whereby said pin (10) is provided on its one end with said interaction means (16) and on its other end with a plate (11) which is releasably coupled with said control lever (1),
- **in that** said control lever (1) is provided on its back part with a fork (2) having two arms (3), whereby at the ends of said arms (3) is provided said elastic hindering means (8) such to hinder the release between said releasable coupling means (12, 6) and said control lever (1),
- ***in that** said releasable coupling means includes*
-- *a relief (12) provided on said plate (11) and a blind hole (6) provided on said control lever (1) **or***
-- *a peg (6') provided on said control lever (1) and a notch (12') provided on said plate (11), whereby said relief or peg and said blind hole or notch*
-- are coupled during acceleration and
-- are not coupled during braking action,
- **in that** an adjustable stop is provided such as to allow the release between said control lever (1) and said releasable coupling means (12, 6), and
- **in that** said elastic return means (13) and said elastic hindering means are springs.

2. Device according to claim 1, **characterised in that** a cruise control device is provided.

3. Device according to claim 2, **characterised in that** said cruise control device provides a plate (17), provided behind the accelerator device, and provided with means (21) for fixing the acceleration position and means (8, 9) for interaction with manual acceleration and braking means.

## Patentansprüche

1. Vorrichtung zur automatischen Rücknahme des Gaspedals während der Bremsung enthaltend:
- eine handbetätigte Beschleunigungseinrichtung;
- Mittel (16), die mit der vorgenannten handbetätigten Einrichtung zusammenwirken und
- Steuerhebel (1) zur Steuerung der Beschleunigung und der Bremsung, wobei die vorgenannten Steuer und Bremswirkungen in zwei zueinander wesentlich senkrechten Richtungen erfolgen;
- Mittel (10,11) zur Ankupplung der vorgenannten zusammenwirkenden Mittel (16) mit der vorgenannten handbetätigten Beschleumigungseinrichtung;
- auslösbare Kupplungsmittel (12,6), die zu den vorgenannten Ankupplungsmitteln (10,11) zugehören und auslöbar mit dem vorgenannten Stenerhebel (1) verbindbar sind;
- Elastische Hindermittel (8) zur Verhinderung einer Entkupplung zwischen den vorgenannten auslösbaren Ankupplungsmitteln (10,11) und dem vorgenannten Stenerhebel (11) und
- Elastische Rückführmittel (13) zum Rückführen der Beschleunigungseinrichtung in eine Leerstellung,
**dadurch gekennzeichnet,**
- **dass** die vorgenannten Ankupplungsmittel mit einem durch eine in einem Körper (15) der vorgenannten Handbeschleunigungseinrichtung vorgesehene Bohrung (14) durchgehenden Bolzen versehen ist (10), wobei der vorgenannte Bolzen (10) an einem Ende mit den vorgenannten Mitwirkmitteln (16) und an anderem Ende mit einer Platte (11) versehen ist, die auslösbar mit mit dem vorgenannten Stenerhebel (1) gekuppelt ist,
- **dass** der vorgenannte Stenerhebel (1) an seiner Hinterseite mit einer Gabel (2), die zwei Arme (3) hat, versehen ist, wobei an den Enden der Arme (3) das vorgenannte elastische Hindermittel (8) so angeordnet ist, dass eine Entkupplung zwischen dem auslösbaren Ankupplungsmittel (12,6) und dem Stenerhebel (1) verhindert wird;
- **dass** das vorgenannte auslösbare Ankupplungsmittel:
- einen an der Platte (11) vorgesehenen Vorsprung (12) und eine am Stenerhebel (1) vorgesehene Blindbohrung (6),
- einen am Stenerhebel (1) vorgeseheneh Zapfen (6') und eine an der Platte (1) vorgesrhen Aussparung (12') enthält, wobei der vorgenannte Vorsprung oder Zapfen und die vorgenannte Blindbohrung oder Aussparung
- während der Beschleunigung gekuppelt und
- während der Bremsung nicht gekuppelt sind;
- **dass** eine verstellbarer Anschlag so angeordnet ist, dass eine Entkupplung zwischen dem Stenerhebel (1) und den auslöbaren Ankupplungsmitteln (12,6) gestattet wird und
**dass** das vorgenannte Rückführmittel (13) und das vorgenannte elastsche Hindermittel aus Feder bestehen.

2. Vorrichtung nach Anspruch 1, **dadurch gekennzeichnet, dass** eine Fahrt-Steuervorrichtung vorgesehen ist.

3. Vorrichtung nach Ansprunch 2, **dadurch gekennzeichnet, dass** die Fahrt-Steuervorrichtung eine hinter der Beschleunigungseinrichtung engeordnete Platte (17) enthält, die mit Mitteln (21) zur Sicherung der Beschunigunsstelle und Mitteln (8,9) zur Mitarbeit mit den handbetätigten Bescheunigungs-und - Bremsitteln versehen ist.

## Revendications

1. Dispositif pour le dégagement automatique de l'áccelérateur lars du freinage, comprenant :
- un dispositif d'accélération manuel;
- des moyens (16) interageants avec ledit dispositif l'accélération manuel;
- un levier de contrôle (1) pour contrôler l'accélération et le freinage, lesdits actions d'accélération et du freinage ayant lieu selon deux directions sensiblement perpendiculaires;
- des moyens (10,11) pour accoupler integralement lesdits moyens d'interaction (16) avec ledit dispositif d'accélération manuel;
- des moyens d'accouplage dégaeables (12,6) intégrais avec lesdits moyens d'accouplage integrals (10,11) et aptes à être joints de façon dégageable avec ledit levier de contrôle (1);
- des moyens d'empêchement élastiques (8) pour empêcher le dégagement entre lesdit moyens d'accouplage dégageables (16,6) et ledit levier de contrôle (1) et
- des moyens de retour élastiques (13) pour retourner le dispositif d'accélération en position neutre,
**caractérisé en ce que**:
- lesdits moyens d'accouplage intégrais comprendent un pivot (10) passant à travers un trou (14) pratiqué dans un corps (15) dudit dispositif d'accélération manuel, ledit pivot (10) étant muni à un des ses extrémités desdits moyens d'interaction (16) et à l'autre extrémité d'une plaque, qui est accouplée de façon dégageable avec ledit levier de contrôle (1);
- ledit levier de contrôle (1) est muni sur son coté postérieur d'une fourche (2) ayant deux bras (3), à les extrémités desdits bras (3) étant situés lesdits moyens d'empêchement élastiques pour empêcher le dégagement entre lesdits moyens d'accouplage dégageables (12,6) et ledit levier de contrôle (1);
- lesidits moyens d'accouplage gégageables comprenant:
• un relief (12) prévu sur ladite plaque (11) et un trou borgue fait sur ladit levier de contrôle (1) ou
• un saillie (6') prévue sur ladit levier de contrôle (1) et une gorge prévue aur ladite plaque (11), lesdits relief ou saillie et lesdits trou borgue ou gorge
• étant accouplés lors de l'accélération et
• n'étant pas accouplés lors du freinage;
- un stop regable est prévu de façon à permettre le dégagement entre ledit levier de contrôle et lesdits mouyens d'accouplage dégageables (12,6) et
- lesdits moyens de retour élastiques (13) et lesdits moyens d'empêchement élastiques sont des ressorts.

2. Dispositif selon la revendication 1, **caractérisé en ce que** il est prévu un dispositif de contrôle de croisière.

3. Dispositif selon la revendication 2, **caractérisé en ce que** ledit dispositif de contrôle de croisière comprend une plaque (17) placée derriere le dispositif d'accélération et est munie des moyens (21) pour fixer la position d'accélération et des moyens (8,9) pour interagir avec les moyens d'accélération et de freinage manuels.
